# FASCICULE DE BREVET EUROPEEN

(11) **EP 1 987 473 B1**
(45) Date de publication et mention de la délivrance du brevet: **28.09.2011**
(21) Numéro de dépôt: 07731640.4
(22) Date de dépôt: 16.02.2007
(51) Int. Cl.: G06K 9/00, G06T 7/00

(54) **DETECTION AUTOMATIQUE D'UN OUTIL CHIRURGICAL SUR UNE IMAGE FOURNIE PAR UN SYSTEME D'IMAGERIE MEDICALE**
AUTOMATISCHE ERKENNUNG EINES CHIRURGISCHEN WERKZEUGES AUF EINEM BILD EINES MEDIZINISCHEN BILDGEBUNGSSYSTEMS
AUTOMATIC DETECTION OF A SURGICAL TOOL ON AN IMAGE PROVIDED BY A MEDICAL IMAGING SYSTEM

(30) Priorité: 20.02.2006 FR 0650591
(43) Date de publication de la demande: 05.11.2008
(73) Titulaire: UNIVERSITE JOSEPH FOURIER, 38041 Grenoble Cédex 9 (FR)
(72) Inventeur: CINQUIN, Philippe, F-38330 Saint Nazaire Les Eymes (FR); VOROS, Sandrine, F- 92310 Sèvres (FR)
(74) Mandataire: de Beaumont, Michel
(86) Numéro de dépôt international: PCT/FR2007/050816
(87) Numéro de publication internationale: WO 2007/096557

(56) Documents cités:
- DOIGNON ET AL: "Real-time segmentation of surgical instruments inside the abdominal cavity using a joint hue saturation color feature" REAL-TIME IMAGING, ACADEMIC PRESS LIMITED, GB, vol. 11, no. 5-6, octobre 2005 (2005-10), pages 429-442, XP005074688 ISSN: 1077-2014
- LUKE WINDISCH ET AL: "Bayesian Differentiation of Multi-scale Line-Structures for Model-Free Instrument Segmentation in Thoracoscopic Images" SECOND INTL CONF ON IMAGE ANALYSIS AND RECOGNITION (ICIAR 2005), 28 septembre 2005 (2005-09-28), - 30 septembre 2005 (2005-09-30) pages 938-948, XP019020081
- CHEOLWHAN LEE ET AL: "Image analysis for automated tracking in robot-assisted endoscopic surgery" PATTERN RECOGNITION, 1994. VOL. 1 - CONFERENCE A: COMPUTER VISION & IMAGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, vol. 1, 9 octobre 1994 (1994-10-09), pages 88-92, XP010215978 ISBN: 0-8186-6265-4
- GUO-QING WEI G Q ET AL: "Controlling Robot Motion with Color Image Segmentation" IEEE ENGINEERING IN MEDICINE AND BIOLOGY MAGAZINE, IEEE SERVICE CENTER, PISACATAWAY, NJ, US, vol. 16, no. 1, janvier 1997 (1997-01), pages 40-45, XP011084758 ISSN: 0739-5175

## Description

### Domaine de l'invention

La présente invention concerne les interventions chirurgicales assistées par ordinateur dans lesquelles le chirurgien pratique l'intervention avec l'assistance d'images fournies par un système d'imagerie médicale. La présente invention concerne plus particulièrement la détection automatique d'outils chirurgicaux sur les images fournies par le système d'imagerie médicale.

### Exposé de l'art antérieur

Lors d'une intervention chirurgicale coelioscopique, la cavité abdominale d'un patient est gonflée à l'aide de dioxyde de carbone. Des incisions de petites dimensions sont réalisées sur la paroi abdominale et un trocart est introduit dans chaque incision. Le nombre d'incisions dépend du type d'intervention envisagée et varie en général de 2 à 5. Chaque trocart correspond à un tube creux et étanche dans lequel est susceptible de coulisser un outil chirurgical. Un endoscope et des outils chirurgicaux sont introduits dans la cavité abdominale par l'intermédiaire des trocarts. L'image fournie par l'endoscope est captée par une caméra et affichée sur un écran d'affichage. Au cours de l'intervention chirurgicale, un assistant déplace l'endoscope selon les instructions données par le chirurgien. A l'aide de l'image vidéo fournie par la caméra liée à l'endoscope, le chirurgien manipule les outils chirurgicaux dans la cavité abdominale selon l'intervention à réaliser.

Un avantage d'une intervention chirurgicale coelioscopique est qu'elle est peu traumatisante pour le patient puisque les incisions pratiquées sont de dimensions réduites. Toutefois, le chirurgien ne voit pas directement les extrémités des outils chirurgicaux situées dans la cavité abdominale et dispose seulement de l'image vidéo fournie par la caméra liée à l'endoscope pour pratiquer l'intervention. Une intervention chirurgicale coelioscopique requiert donc une grande expérience de la part du chirurgien.

Des systèmes de positionnement peuvent être utilisés pour déplacer l'endoscope à la place d'un assistant. Il s'agit par exemple du système de positionnement commercialisé par la société Computer Motion sous l'appellation Aesop ou du système de positionnement commercialisé par la société Armstrong Healthcare sous l'appellation EndoAssist. De tels systèmes de positionnement peuvent être commandés par le chirurgien au moyen d'une interface homme/machine, par exemple un pédalier, un système à commande vocale ou un système de commande basé sur la détection des mouvements de tête du chirurgien. A titre d'exemple, suite à des commandes vocales telles que "à gauche", "à droite", "en haut", "en bas", le système de positionnement peut déplacer l'extrémité de l'endoscope dans la cavité abdominale respectivement vers la gauche, vers la droite, vers le haut ou vers le bas.

Un inconvénient de tels systèmes de positionnement est que seules des commandes élémentaires correspondant à des déplacements simples de l'endoscope sont généralement disponibles. Le chirurgien doit alors fournir de fréquentes commandes de déplacement au système de positionnement de l'endoscope, par exemple pour suivre les déplacements d'un outil chirurgical particulier, tout en manipulant simultanément les outils chirurgicaux, ce qui s'avère être très contraignant. Il serait souhaitable de pouvoir commander les déplacements du système de positionnement de l'endoscope selon des instructions plus complexes. Par exemple, il serait avantageux que le chirurgien puisse désigner un outil chirurgical particulier, ce qui entraînerait le déplacement automatique de l'endoscope vers l'outil désigné. Le chirurgien n'aurait alors plus à donner régulièrement de nouvelles commandes de déplacement au système de positionnement de l'endoscope et pourrait se consacrer pleinement à l'intervention. Pour la mise en oeuvre de telles commandes de déplacement, une possibilité consiste à déterminer automatiquement les positions des outils chirurgicaux sur l'image vidéo fournie par la caméra liée à l'endoscope. Le système de positionnement de l'endoscope peut alors être commandé de façon automatique à partir des positions déterminées des outils chirurgicaux et, par exemple, d'une commande initiale du chirurgien.

La publication de Wei et al. intitulée "Real-Time Visual Servoing for Laparoscopic Surgery. Controlling Robot Motion with Color Image Segmentation" IEEE Engineering in Medecine and Biology, pages 40-45, 1997 décrit un procédé de commande des déplacements d'un système de positionnement d'endoscope à partir de la détermination de la position d'un outil chirurgical sur une image vidéo dans lequel l'outil porte un marqueur coloré. La détection du marqueur coloré permet la détermination de la position de l'outil sur l'image vidéo. Un inconvénient d'un tel procédé est qu'il est nécessaire de modifier l'outil chirurgical pour lui appliquer un marqueur coloré, ce qui présente un coût important. En outre, la détection de l'outil est impossible dès que le marqueur coloré associé n'est plus visible sur l'image vidéo.

La publication Doignon et al. intitulée "Real-time segmentation of surgical instruments inside the abdominal cavity using a joint hue saturation color feature", Real-Time Imaging, Vol. 11, pp. 429-442, 2005 ; et la publication Windisch et al. intitulée "Bayesian Differentiation of Multi-scale Line-Structure for Model-Free Instrument Segmentation in Thoracoscopic Images", Proc Second Intl. Conf. on Image Analysis and Recognition, Lecture Notes in Computer Science, Vol. 3656, pp. 938, 2005, décrivent d'autres méthodes d'analyse visant à détecter un outil chirurgical sur une image. Toutefois, ces méthodes impliquent des calculs particulièrement complexes.

### Résumé de l'invention

La présente invention vise à pallier tout ou partie des inconvénients cités précédemment.

Plus particulièrement, la présente invention vise un procédé et un dispositif de détection d'outils chirurgicaux sur des images fournies par un système d'imagerie médicale qui ne nécessite pas de modification des outils chirurgicaux utilisés de façon classique lors d'une intervention chirurgicale.

Selon un autre objet de la présente invention, la détection des outils chirurgicaux est réalisée en temps réel.

Pour atteindre ces objets, la présente invention prévoit un dispositif de détection d'un outil chirurgical sur une image, ledit outil chirurgical passant par une incision pratiquée au niveau de la peau ou d'un organe d'un patient, le dispositif comprenant un moyen de mémorisation de paramètres de forme de l'outil chirurgical ; un moyen de détermination de la position de la projection de l'incision dans le plan de l'image ; et un moyen de détermination de points et/ou droites caractéristiques de la projection de l'outil chirurgical sur l'image à partir des paramètres de forme et de la position de la projection de l'incision.

Selon un exemple de réalisation de la présente invention, le dispositif comprend des moyens d'acquisition de première et seconde images de l'incision ; des moyens de détermination d'une première position d'un point de la projection de l'incision sur la première image et une seconde position dudit point sur la seconde image ; et des moyens de détermination de la position dudit point par rapport au patient à partir des premières et seconde positions.

Selon un exemple de réalisation de la présente invention, l'outil chirurgical a une forme allongée, les bords latéraux de la projection de l'outil dans le plan de l'image correspondant à des droites, le moyen de détermination des points et/ou droites caractéristiques étant adapté à déterminer un ensemble de pixels de l'image tel que, pour chaque pixel de l'ensemble de pixels, le gradient d'une fonction qui dépend de la couleur du pixel est supérieur à un seuil ; et à sélectionner chaque pixel pour lequel la droite passant par le pixel etperpendiculaire au gradient passe au niveau de la projection de l'incision dans le plan de l'image.

Selon un exemple de réalisation de la présente invention, le moyen de détermination des points et/ou droites caractéristiques est adapté à déterminer l'axe de symétrie de la projection de l'outil chirurgical sur l'image à partir des pixels sélectionnés ; à déterminer les pixels de l'axe de symétrie appartenant à la projection de l'outil sur l'image ; et à déterminer le pixel de l'axe de symétrie correspondant à l'extrémité de l'outil.

Selon un exemple de réalisation de la présente invention, le moyen de détermination de points et/ou droites caractéristiques est adapté à déterminer, parmi les pixels sélectionnés, l'ensemble de pixels tels que, pour chaque couple de pixels de l'ensemble de pixels, la médiatrice du couple passe au niveau de la projection de l'incision dans le plan de l'image ; à classer les médiatrices en groupes de médiatrices adjacentes ; et à déterminer l'axe de symétrie à partir du groupe de médiatrices contenant le plus grand nombre de médiatrices.

Selon un exemple de réalisation de la présente invention, le moyen de détermination de points et/ou droites caractéristiques est adapté à attribuer à chaque pixel de l'axe de symétrie une classe de couleur parmi une première ou une seconde classe de couleur ; à sélectionner un premier groupe de pixels adjacents contenant le plus grand nombre de pixels adjacents de la première classe de couleur et un second groupe de pixels adjacents contenant le plus grand nombre de pixels adjacents de la seconde classe de couleur ; et à sélectionner, parmi le premier ou le second groupe de pixels, le groupe de pixels le plus proche de la projection de l'incision dans le plan de l'image.

La présente invention prévoit également un dispositif de commande d'un système de positionnement d'un moyen d'acquisition d'images d'un patient au niveau duquel au moins une incision a été pratiquée pour le passage d'un outil, le dispo sitif de commande comprenant un moyen de fourniture d'instructions émises par un utilisateur ; un dispositif de détection tel que précédemment défini ; et un moyen de fourniture de signaux de commande au système de positionnement à partir des points et/ou droites caractéristiques de l'outil chirurgical fournis par le dispositif de détection et des instructions fournies par le moyen de fourniture d'instructions.

Selon un exemple de réalisation de la présente invention, le moyen d'acquisition d'images comprend un endoscope et une caméra.

La présente invention prévoit également un procédé de détection d'un outil chirurgical sur une image, ledit outil passant par une incision pratiquée au niveau de la peau ou d'un organe d'un patient, le procédé comportant les étapes consistant à mémoriser des paramètres de forme de l'outil chirurgical ; à déterminer la position de la projection de l'incision dans le plan de l'image ; et à déterminer des points et/ou droites caractéristiques de la projection de l'outil chirurgical sur l'image à partir des paramètres de forme et de la position de la projection de l'incision.

Selon un exemple de réalisation de la présente invention, l'outil chirurgical a une forme allongée, les bords latéraux de la projection de l'outil dans le plan de l'image correspondant à des droites, le procédé comprenant en outre les étapes consistant à déterminer un ensemble de pixels de l'image tel que, pour chaque pixel de l'ensemble de pixels, le gradient d'une fonction qui dépend de la couleur du pixel est supérieur à un seuil ; et à sélectionner chaque pixel pour lequel la droite passant par le pixel et perpendiculaire au gradient passe au niveau de la projection de l'incision dans le plan de l'image.

### Brève description des dessins

Ces objets, caractéristiques et avantages, ainsi que d'autres de la présente invention seront exposés en détail dans la description suivante d'un exemple particulier faite à titre non-limitatif en relation avec les figures jointes parmi lesquelles :
la figure 1 représente, de façon schématique, un exemple de réalisation d'un dispositif de commande d'un système de positionnement d'un endoscope mettant en oeuvre le procédé de détection d'outils chirurgicaux selon l'invention ;
la figure 2 représente, de façon schématique, un exemple de réalisation du système de positionnement de la figure 1 ;
la figure 3 illustre la relation entre la position d'un point de l'espace et la projection de ce point sur le plan image d'une caméra ;
la figure 4 représente un exemple d'étapes du procédé de détection d'outils chirurgicaux selon l'invention ; et
la figure 5 illustre, de façon schématique, le principe du procédé de détection d'outils chirurgicaux selon l'invention.

### Description détaillée

Par souci de clarté, de mêmes éléments ont été désignés par de mêmes références aux différentes figures.

La présente invention se base sur le fait que pour certaines interventions chirurgicales, par exemple une coelioscopie, l'introduction de matériel chirurgical au niveau d'une vertèbre, etc., un outil chirurgical est introduit dans le corps du patient par l'intermédiaire d'une incision de petites dimensions. La présente invention prévoit donc de détecter un tel outil chirurgical sur les images fournies par un système d'imagerie médicale en considérant que l'outil passe nécessairement par l'incision, dont la position peut être déterminée au préalable, et que la forme de l'outil est connue. Ceci permet de faciliter la détection de l'outil sur les images de sorte qu'une détection peut être réalisée de façon automatique et en temps réel.

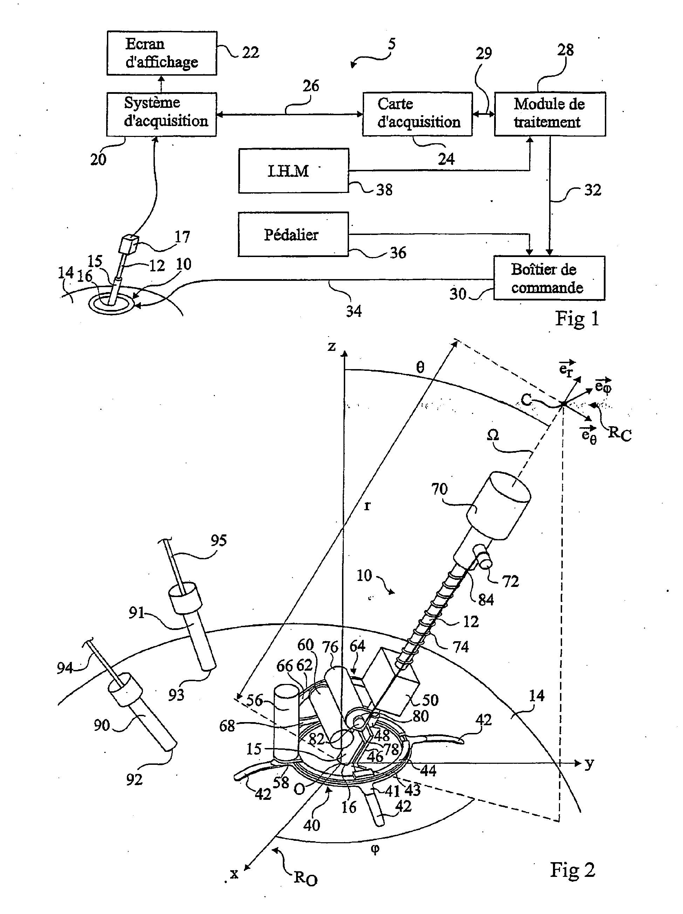

La figure 1 représente un exemple de réalisation d'un dispositif 5 de commande d'un système de positionnement 10 d'un endoscope 12 mettant en oeuvre le procédé de détection d'outils chirurgicaux selon l'invention. Pour une coelioscopie, le système de positionnement 10 est placé sur l'abdomen 14 d'un patient dont la cavité abdominale a été remplie de gaz. Le système de positionnement 10 maintient un trocart 15 contenant l'endoscope 12 et pénétrant dans la cavité abdominale par l'intermédiaire d'une incision 16. Une caméra 17 est fixée à l'extrémité de l'endoscope 12 à l'extérieur de la cavité abdominale. Le système de positionnement 10 est du type permettant un déplacement du trocart 15 et de l'endoscope 12 selon un certain nombre de degrés de liberté, par exemple un degré de liberté de translation et deux degrés de liberté de rotation.

Les images captées par la caméra 17 sont transmises à un système d'acquisition d'images 20 adapté à afficher les images vidéo sur un écran d'affichage 22. Le système d'acquisition 20 est relié à une carte d'acquisition 24 par l'intermédiaire d'une liaison 26, par exemple un câble S-VIDEO. La carte d'acquisition 24 est reliée à un module de traitement 28, par exemple un ordinateur, par l'intermédiaire d'une liaison 29, par exemple un câble Fire-Wire (câble IEEE 1394). La carte d'acquisition 24 réalise un prétraitement des images vidéo qui sont transmises au module de traitement 28. Le module de traitement 28 est adapté, comme cela sera expliqué plus en détail par la suite, à analyser les images vidéo pour détecter la présence d'outils chirurgicaux sur les images.

Le module de traitement 28 est, par ailleurs, adapté à transmettre des commandes de déplacement à un boîtier de commande 30 par l'intermédiaire d'une liaison 32. Le boîtier de commande 30 est adapté à traduire les commandes de déplacement transmises sur la liaison 32 en signaux de commande du système de positionnement 10 et à transmettre les signaux de commande au système de positionnement 10 par l'intermédiaire d'une liaison 34. Le chirurgien peut activer ou désactiver le boîtier de commande 30 par l'intermédiaire d'un pédalier 36. En outre, le chirurgien peut fournir des instructions au module de traitement 28 par l'intermédiaire d'une interface homme/machine 38 qui peut comprendre un système à commande vocale et/ou un système de détection des mouvements de la tête du chirurgien.

La figure 2 représente un exemple de réalisation plus détaillé du système de positionnement 10. Il s'agit par exemple du système de positionnement décrit dans la publication WO 03/094759 au nom de PRAXIM. L'endoscope 12 a l'aspect d'un tube cylindrique d'axe Ω d'une quarantaine de centimètres de longueur et de quelques centimètres de diamètre. L'axe Ω correspond, par exemple, à l'axe optique de l'endoscope 12 et de la caméra 17. La caméra 17 n'est pas représentée en figure 2.

Le système de positionnement 10 comprend une base sensiblement plane 40 comportant une partie centrale plane et annulaire 41, entourant l'incision 16, de laquelle s'étendent quatre bras 42. Le système de positionnement 10 peut être fixé par des courroies reliées aux bras 42. La base 40 peut également être collée sur l'abdomen 14 du patient. Un anneau fixe 43 est disposé sur la base annulaire 41. L'anneau fixe 43 est solidaire de la base 41. Un anneau mobile 44 d'axe (Oz), sensiblement perpendiculaire au plan tangent à l'abdomen 14 au niveau de l'incision 16, est monté à rotation sur l'anneau fixe 43 autour de l'axe (Oz). L'anneau fixe 43 comprend une denture périphérique, non représentée, sur sa face latérale extérieure.

Un étrier 46 est monté à pivot sur l'anneau mobile 44 selon un axe sensiblement perpendiculaire à l'axe (Oz) et inclus dans le plan tangent à l'abdomen 14 au niveau de l'incision 16. Le trocart 15 est maintenu à l'étrier 46 par une bride de fixation 48, par exemple vissée sur l'étrier 46, qui permet une liaison et une séparation simple et rapide du trocart 15 et de l'étrier 46. Le trocart 15 comporte une protubérance 50 située du côté de la bride de fixation 48 opposé à la partie centrale 41. La protubérance 50 peut représenter des poignées, des valves d'étanchéité, des connecteurs, etc. Les diamètres intérieurs de l'anneau mobile 44 et de la partie centrale annulaire 41 sont choisis pour permettre le retrait du système 10 pendant une intervention sans déplacer le trocart 15, ou bien permettre le retrait du trocart 15 de l'abdomen du patient sans déplacer le système 10.

Un premier moteur électrique 56, destiné à mettre en rotation l'anneau mobile 44 par rapport à l'anneau fixe 43, est monté solidaire de l'anneau mobile 44 par l'intermédiaire d'une platine 58. Le premier moteur 56 est relié au boîtier de commande 30, non représenté en figure 2. Une roue dentée, non visible en figure 2, entraînée par l'arbre du premier moteur 56 engrène sur la denture de l'anneau fixe 43. La mise en rotation de la roue dentée par le premier moteur 56 entraîne la mise en rotation de l'anneau mobile 44 par rapport à l'anneau fixe 43 autour de l'axe (Oz).

Un deuxième moteur électrique 60 est fixé à l'étrier 46, du côté de l'étrier 46 opposé à la bride de fixation 48, par l'intermédiaire d'une platine 62. L'arbre, non visible en figure 2, du deuxième moteur 60 est orienté selon l'axe de pivotement de l'étrier 46. La platine 62 comprend une ouverture permettant le passage de l'arbre du deuxième moteur 60, non visible en figure 2. Le deuxième moteur 60 est relié au boîtier de commande 30. Un élément d'entraînement 64 comprend un arc circulaire 66 dont les extrémités sont reliées par une portion rectiligne 68 fixée à l'anneau mobile 44. L'élément d'entraînement 64 s'étend sensiblement dans un plan perpendiculaire au plan contenant l'anneau mobile 44. L'axe de l'arc circulaire 66 correspond à l'axe de pivotement de l'étrier 46. La paroi latérale de l'arc circulaire 66 en vis-à-vis de la portion rectiligne 68 comprend une denture (non représentée). L'arbre du deuxième moteur 60 porte une roue dentée (non représentée) qui coopère avec la denture de l'arc circulaire 66 de façon que, lorsque la roue dentée est mise en rotation par le deuxième moteur 60, l'étrier 46 est entraîné en pivotement par rapport à l'anneau mobile 44.

L'extrémité libre de l'endoscope 12 comprend une butée cylindrique 70 d'où se projette un ergot 72. Un ressort de compression 74 s'appuie à une extrémité sur la butée cylindrique 70 et à l'extrémité opposée sur la protubérance 50 du trocart 15. Un troisième moteur électrique 76 est fixé à l'étrier 46, à côté du deuxième moteur 60, par l'intermédiaire d'une platine 78. La platine 78 comprend une ouverture 80 permettant le passage de l'arbre, non visible en figure 2, du troisième moteur 76. L'arbre du troisième moteur 76 est orienté selon l'axe de pivotement de l'étrier 46. Le troisième moteur 76 est relié au boîtier de commande 30. Un cylindre d'enroulement 82 est disposé à l'extrémité libre de l'arbre du troisième moteur 76. Un filetage hélicoïdal (non représenté) est formé sur la face extérieure du cylindre d'enroulement 82. Un câble 84 est relié aux extrémités à l'ergot 72 et au cylindre 82 et est enroulé autour du cylindre 82. Lorsque le troisième moteur 76 entraîne le cylindre 82 en rotation, le câble 84 s'enroule autour du cylindre 82 et et rapproche la butée cylindrique 70 du trocart 15. L'endoscope 12 coulisse alors dans le trocart 15 selon l'axe Ω et comprime le ressort 74. Lorsque le troisième moteur 76 n'est plus actionné, le ressort 74 se détend et ramène l'endoscope 12 dans une position de repos. Un bras porteur, orienté par le chirurgien avant le début de l'opération, peut être prévu pour porter le système de positionnement 10 et éviter que la totalité du poids du système de positionnement 10 ne soit appliquée sur le patient.

Le système de positionnement 10 précédemment décrit permet de déplacer l'endoscope 12 selon deux degrés de liberté de rotation et un degré de liberté de translation à partir de signaux de commande fournis par le boîtier de commande 30 aux moteurs électriques 56, 60, 76.

Des trocarts supplémentaires 90, 91 sont disposés au niveau d'incisions 92, 93 de petites dimensions pratiquées dans la paroi abdominale 14 du patient. Les trocarts supplémentaires 90, 91 permettent l'introduction d'outils chirurgicaux 94, 95, partiellement représentés en figure 2, dans la cavité abdominale.

Dans la suite de la description, on appelle R_{O} (O,x,y,z) un repère, par exemple orthonormé, dont l'origine O correspond par exemple au "point fixe" du système de positionnement 10, c'est-à-dire le point d'intersection entre l'axe de rotation de l'anneau mobile 44 et l'axe de rotation de l'étrier 46. Les axes (Ox) et (Oy) correspondent à deux axes perpendiculaires entre eux et perpendiculaires à l'axe (Oz) qui, comme cela a été décrit précédemment, est perpendiculaire à la paroi abdominale 14 au niveau de l'incision 16. Le repère R_{O} est considéré comme étant fixe par rapport au patient au cours de l'intervention chirurgicale. La caméra 17 et l'endoscope 12 sont, en fonctionnement, fixes l'un par rapport à l'autre. On appelle C un point fixe par rapport à la caméra 17, situé sur l'axe Ω, à une distance r du point O. L'angle θ correspond à l'angle entre l'axe Ω et l'axe (Oz) et l'angle ϕ correspond à l'angle entre la projection de l'axe Ω dans le plan (Oxy) et l'axe (Ox). Les coordonnées du point C dans le repère R_{O} sont (rsinθcosϕ, rsinθsinϕ, rcosθ).

On appelle R_{C} (C, e̅ᵣ, e̅_{θ}, e̅_{ϕ}) le repère sphérique associé au point C. Le repère R_{C} est un repère fixe par rapport à la caméra 17. On note (X, Y, Z) les coordonnées d'un point P quelconque exprimées dans le repère R_{O} et (l, m, n) les coordonnées du point P exprimées dans le repère R_{C}. Avant l'intervention chirurgicale, on prévoit une étape d'étalonnage ou calibrage du système de positionnement 10 qui consiste à déterminer la matrice de passage permettant d'obtenir les coordonnées (l, m, n) du point P à partir des coordonnées (X, Y, Z) et la relation entre les commandes de déplacement fournies par le module de traitement 28 au boîtier de commande 30 et l'évolution des paramètres r, θ et ϕ. Au cours de l'intervention chirurgicale, le module de traitement 28 est alors adapté à déterminer à tout instant la position du repère R_{C} par rapport au repère R_{O} à partir des commandes de déplacement fournies au boîtier de commande 30. Il est clair que les repères R_{O} et R_{C} pourraient être définis différemment par rapport à ce qui a été décrit précédemment. La seule condition est que le repère R_{O} puisse être considéré comme étant fixe par rapport au patient au cours de l'intervention, que le repère R_{C} puisse être considéré comme étant fixe par rapport à la caméra au cours de l'intervention et que l'on puisse déterminer à tout instant la position du repère R_{C} par rapport au repère R_{O}.

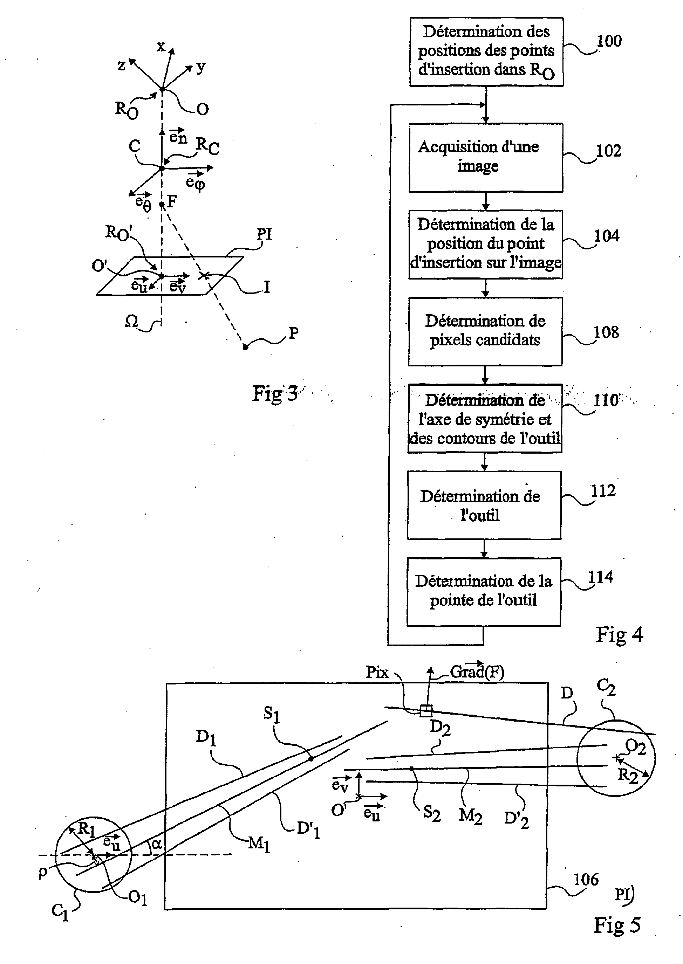

En figure 3, on a représenté de façon schématique les repères R_{O} et R_{C} dont les origines O et C sont situées sur l'axe optique Ω de l'endoscope 12. On considère que la caméra 17 fonctionne selon un modèle de caméra sténopé (caméra pinhole). Un tel modèle de caméra est décrit, par exemple, dans l'ouvrage intitulé "Three Dimensional Computer Vision - A Geometric Viewpoint" d'Olivier Faugeras, series : Artificial Intelligence, the MIT press, Cambridge Massachussets, ISBN 0-262-06158-9 (Chapitre 3). La caméra 17 peut alors être représentée par un centre de projection F et un plan image PI. Le plan image PI correspond au plan dans lequel se forment les images captées par la caméra 17 et transmises au système d'acquisition 20. Le plan image PI et le centre de projection F sont fixes par rapport au repère R_{C}. Un point P quelconque de l'espace se projette dans le plan image PI pour former un point I. On associe au plan image PI un repère à deux dimensions R_{O'} (O', e̅ᵤ, e̅ᵥ), où O' correspond, par exemple, au point du plan image PI sur l'axe optique Ω et on appelle (u, v) les coordonnées du point I dans le repère R_{O'}.

Avant l'intervention chirurgicale, on prévoit une étape d'étalonnage ou calibrage de la caméra 17. Ceci consiste à définir la matrice de passage qui permet d'obtenir les coordonnées (u, v) du point I exprimées dans le repère R_{O'} à partir des coordonnées (1, m, n) du point P exprimées dans le repère R_{C}. Selon le modèle pinhole, le point I correspond au point d'intersection entre le plan image P et la droite passant par le point P et le centre de projection F. La matrice de passage est obtenue à partir des coordonnées du point F et l'équation du plan image PI exprimées dans le repère R_{C} et qui dépendent des caractéristiques techniques de la caméra 17 utilisée. D'autres modèles de caméra peuvent être utilisés.

Après les étapes d'étalonnage du système de positionnement 10 et de la caméra 17, le module de traitement 28 peut déterminer, pour un point P dont les coordonnées (X, Y, Z) dans le repère fixe R_{O} ont été déterminées au préalable et mémorisées au niveau du module de traitement 28, les coordonnées (u, v) du point I, projection du point P dans le plan image PI, quelle que soit la position de la caméra 17 dans le repère R_{O}.

La figure 4 illustre les étapes d'un exemple de procédé de détection selon l'invention d'outils chirurgicaux sur une image fournie par la caméra 17 mis en oeuvre par le module de traitement 28.

On suppose que le chirurgien a pratiqué les incisions 16, 92, 93 dans la paroi abdominale 14 du patient, a mis en place les trocarts 15, 90, 91 dans les incisions correspondantes, a introduit l'endoscope 12 dans le trocart 15 et a disposé le système de positionnement 10 sur la paroi abdominale 14 du patient. En outre, les étapes d'étalonnage du système de positionnement 10 et de la caméra 17 sont été réalisées. De plus, on a mémorisé au niveau du module de traitement 28 un identifiant, par exemple un numéro, pour chaque couple incision-outil. Enfin, le rayon de chaque outil 94, 95, supposé cylindrique, est mémorisé au niveau du module de traitement 28.

A l'étape 100, on détermine les positions, dans le repère R_{O}, des incisions 92, 93. Pour chaque incision 92, 93, on détermine la position d'un point situé sensiblement au "centre" de l'incision, ou point d'insertion, dans le repère R_{O}. La détermination des positions des points d'insertion peut être réalisée par n'importe quel procédé. A titre d'exemple, pour chaque incision 92, 93, le chirurgien peut commander le déplacement de la caméra 17 pour obtenir deux images de l'incision 92, 93 à des positions différentes de la caméra 17. Pour chaque image obtenue, le chirurgien peut indiquer au module de traitement 28 la position de la projection du point d'insertion sur l'image affichée sur l'écran 22 par l'intermédiaire de l'interface 38, c'est-à-dire indiquer la position de la projection du point d'insertion dans le repère R_{O'}. A titre d'exemple, le chirurgien peut déplacer un marqueur sur l'image affichée sur l'écran 22 jusqu'à la position de la projection du point d'insertion. A partir des positions des projections du point d'insertion sur deux images différentes, le module de traitement 28 peut déterminer la position du point d'insertion dans le repère R_{O}. Ceci peut être réalisé selon le procédé décrit dans la publication intitulée "Reconstruction d'une arborescence spatiale à partir d'un nombre minimal de projections : application à l'angiographie numérisée des structures vasculaires", mémoire de thèse d'Eric Coste pour le grade de Docteur en productique, automatique et informatique industrielle de l'université des sciences et technologies de Lille (1996), en particulier, chapitre 1, section III et annexe 4. L'étape 100 est répétée pour chaque incision 92, 93. Le procédé de détermination des points d'insertion précédemment décrit est particulièrement avantageux dans la mesure où il ne nécessite pas d'instruments supplémentaires par rapport à ceux qui sont utilisés de façon classique au cours de l'intervention chirurgicale. Selon un autre procédé de détermination des points d'insertion, la position de chaque point d'insertion dans le repère R_{O} peut être obtenue par l'intermédiaire d'un palpeur dont la position dans le repère R_{O} est fournie par un système de localisation. La position de chaque point d'insertion dans le repère R_{O} est mémorisée au niveau du module de traitement 28. L'intervention chirurgicale proprement dite débute alors et le procédé se poursuit à l'étape 102.

A l'étape 102, le module de traitement 28 reçoit, par l'intermédiaire du système d'acquisition 24, une image fournie par la caméra 17.

La figure 5 représente, de façon schématique, une image 106 telle qu'affichée sur l'écran 22. Le trait continu 106 correspond à la limite physique de l'image fournie par la caméra 17. L'image 106 correspond donc à une partie du plan image PI de la caméra 17. Chaque image est composée d'une matrice de pixels. A titre d'exemple, on a représenté un pixel Pix sous la forme d'une portion carrée de l'image 106. Le procédé continue à l'étape 104.

A l'étape 104, le module de traitement 28 détermine la position, dans le plan image PI, de la projection du point d'insertion de l'outil recherché ou les projections des points d'insertion des outils recherchés. En figure 5, les points O₁ et O₂ correspondent aux projections, dans le plan PI, des points d'insertion associés aux incisions 92, 93 et seront appelés par la suite points d'insertion projetés. Dans le présent exemple, les points d'insertion projetés O₁ et O₂ se trouvent à l'extérieur de l'image fournie par la caméra 17, les incisions 92, 93 n'étant pas visibles sur l'image 106. Pour chaque point d'insertion projeté O₁, O₂, le module de traitement 28 détermine un cercle C₁, C₂, dont le centre correspond au point O₁, O₂ et dont le rayon R₁, R₂ dépend du point O₁, O₂ considéré. A titre d'exemple, le rayon R₁, R₂ correspond sensiblement au rayon apparent de l'outil 94, 95 associé au point d'insertion projeté considéré si l'outil était parallèle au plan image PI. Le procédé continue à l'étape 108.

A l'étape 108, le module de traitement 28 détermine pour chaque pixel de l'image 106 si le pixel est susceptible d'appartenir au contour de la projection d'un outil chirurgical 94, 95. Pour ce faire, la présente invention se base sur le fait que chaque outil chirurgical 94, 95 passe nécessairement par une incision 92, 93 et que la forme de chaque outil chirurgical 94, 95 est connue. Dans le présent exemple de réalisation, on considère que chaque outil chirurgical 94, 95 a une forme allongée et cylindrique.

Le module de traitement 28 détermine les contours présents dans l'image par segmentation, selon une méthode du gradient. La méthode du gradient pour des images en niveau de gris est décrite dans l'ouvrage intitulé "Analyse d'images : filtrage et segmentation", qui est un ouvrage collectif coordonné par J.-P. Cocquerez et S. Phillip, dont les auteurs sont Ph. Bolon, J.-M. Chassery, J.-P. Cocquerez, D. Demigny, C. Graffigne, A. Montanvert, S. Phillip, R. Zéboudj, J. Zérubia. Ed. Masson, 1995. ISBN : 2-225-84923-4. Pour une image en niveau de gris, en appelant F la fonction qui fait correspondre à chaque pixel de position (u,v) le niveau de gris du pixel, on obtient, pour chaque pixel de l'image, un vecteur gradient *̅G̅r̅a̅d̅*̅ (*F*(*u*, *v*)) qui est normal au contour à la position (u,v) (position du pixel) et dont la norme est d'autant plus élevée que le contour est "franc". Pour une image couleur, il est possible de décomposer l'image couleur en trois images en niveau de gris (une image R pour la couleur rouge, une image G pour la couleur verte et une image B pour la couleur bleue). Pour chaque pixel de coordonnées (u,v), on peut alors définir trois vecteurs gradient *̅G̅r̅a̅d̅*̅ (*R*(*u*, *v*))*, G̅r̅a̅d̅* (*G*(*u*, *v*))*, G̅r̅a̅d̅* (*B*(*u*, *v*)) respectivement associés à l'image R, à l'image G et à l'image B. On définit alors le gradient du pixel *̅G̅r̅a̅d̅*̅ (*F*(*u*, *v*)) (ou G̅r̅a̅d̅(F)) comme étant le maximum parmi les trois vecteurs gradient *̅G̅r̅a̅d̅*̅(*R*(*u*, *v*))*, G̅r̅a̅d̅*(*G*(*u*, *v*))*, G̅r̅a̅d̅*(*B*(*u,v*))*.* Le module de traitement 28 ne considère que les pixels de l'image 106 pour lesquels l'amplitude du gradient G̅r̅a̅d̅(F) est supérieure à un seuil déterminé. De tels pixels sont susceptibles de correspondre à une transition entre deux objets de l'image 106, par exemple des organes, des outils, etc. A titre d'exemple, on a représenté en figure 5, le vecteur gradient G̅r̅a̅d̅(F) associé au pixel Pix.

Pour de tels pixels, le module de traitement 28 détermine si la droite passant par le pixel et perpendiculaire au gradient G̅r̅a̅d̅(F) coupe l'un des cercles C₁, C₂. Si une telle condition est remplie, le pixel est susceptible d'appartenir au bord de la projection de l'un des outils chirurgicaux 94, 95 et est appelé par la suite pixel potentiel. La condition précédente traduit le fait que l'outil chirurgical 94, 95 recherché a une forme cylindrique, c'est-à-dire que les bords de la projection de l'outil sur l'image 106 doivent correspondre à des droites, et que l'outil chirurgical 94, 95 passe par une incision 92, 93, c'est-à-dire que les bords de la projection de l'outil doivent passer à proximité d'un point d'insertion projeté O₁, O₂. Dans l'exemple de la figure 5, la droite D perpendiculaire au gradient G̅r̅a̅d̅(F) du pixel Pix coupe le cercle C₂. Le module de traitement 28 en conclut, à cette étape du procédé, que le pixel Pix appartient peut-être au bord de la projection de l'outil chirurgical associé au point d'insertion projeté O₂. On obtient finalement un ensemble de pixels potentiels. Le module 28 met alors en oeuvre divers traitements pour réduire le nombre de pixels potentiels. A titre d'exemple, on peut éliminer les pixels potentiels qui sont isolés d'autres pixels potentiels et qui n'appartiennent manifestement pas aux bords de la projection d'un outil chirurgical. A la fin de l'étape 108, on obtient des ensembles relativement denses de pixels potentiels, appelés pixels candidats, qui ont chacun grossièrement une forme allongée et rectiligne. Le procédé continue à l'étape 110.

A l'étape 110, le module de traitement 28 détermine l'axe de symétrie M₁, M₂ de la projection de chaque outil 94, 95 sur l'image 106. En effet, chaque outil étant cylindrique, les bords de la projection de l'outil correspondent à deux droites D₁, D₁', D₂, D₂' qui ont donc un axe de symétrie. Il est à noter que l'axe de symétrie M₁, M₂ de la projection d'un outil ne correspond pas, sauf cas particulier, à la projection de l'axe de symétrie de l'outil puisque la projection centrale ne conserve pas les proportions entre les distances. L'axe de symétrie M₁, M₂ de la projection d'un outil ne passe donc pas forcément par le point d'insertion projeté O₁, O₂ associé à l'outil. Le module de traitement 28 détermine, pour chaque couple de pixels candidats, si la médiatrice associée au couple de pixels candidats coupe l'un des cercles C₁, C₂. Dans l'affirmative, ceci signifie que la médiatrice, appelée médiatrice candidate, est susceptible de correspondre à un axe de symétrie. Le module de traitement 28 met alors en oeuvre une méthode de tri basée sur la méthode de Hough décrite par exemple dans l'ouvrage intitulé "Use of the Hough Transformation To Detect Lines and Curves in Pictures" de Richard O. Duda et Peter E. Hart, Communications of the ACM, Vol. 15(1), pp. 11-15, 1972. Chaque médiatrice candidate associée à un point d'insertion projeté, par exemple le point O₁, est définie par un couple de paramètres (ρ, α) où ρ est la distance séparant la médiatrice candidate du point d'insertion projeté O₁ et a est l'angle entre la médiatrice candidate et une direction privilégiée, par exemple, la droite (O₁, e̅ᵤ). Pour une médiatrice candidate donnée, ρ peut varier dans l'intervalle [0, R_{1]} et a peut varier dans l'intervalle [0, 2π]. On divise l'intervalle [0, R₁] en sous-intervalles [aᵢ, aᵢ₊₁] adjacents, où i est un entier variant entre 1 et N, et où a₁=0, a_{N+1}=R₁ et aᵢ<aᵢ₊₁. De façon analogue, on divise l'intervalle [0, 2π] en sous-intervalles [bⱼ, bⱼ₊₁] adjacents, où j est un entier variant entre I et M, et où b₁=0, b_{M+1}=2π et bⱼ<bⱼ₊₁. On définit alors une matrice T à N lignes et M colonnes dont la ligne d'indice i est associée au sous-intervalle [aᵢ, aᵢ₊₁] et la colonne d'indice j est associée au sous-intervalle [bⱼ, bⱼ₊₁]. Chaque élément T_{i,j} de la matrice correspond à un compteur initialement mis à 0. Pour chaque médiatrice candidate, on incrémente le compteur T_{i,j} associé aux sous-intervalles [aᵢ, aᵢ₊₁] et [bⱼ, bⱼ₊₁] qui contiennent les paramètres (p, a) associés à ladite médiatrice candidate. Lorsque toutes les médiatrices candidates ont été considérées, le module de traitement 28 détermine les indice iMAX et jMAX du compteur T_{iMAX}, _{jMAX} le plus élevé. L'axe de symétrie de l'outil chirurgical associé au point d'insertion projeté O₁ peut alors correspondre à la droite définie par ρ= (a_{iMAX}+a_{iMAX+1}) /2 et α= (b_{jMAX}+b_{jMAX+1}) /2.

Le module de traitement 28 mémorise également les couples de pixels qui ont participé à l'incrémentation de chaque compteur T_{i,j}. Les droites D₁, D₁', correspondant aux bords de la projection de l'outil chirurgical associé au point d'insertion projeté O₁, sont définies à partir des couples de pixels associés au compteur T_{iMAX}, _{jMAX}. Pour augmenter le nombre de pixels, le module de traitement 28 peut ajouter, pour chaque pixel associé au compteur T_{iMAX, jMAX}, un nouveau pixel correspondant au symétrique du pixel par rapport à l'axe de symétrie. Le premier bord de la projection de l'outil peut alors correspondre à la droite D₁ obtenue par régression linéaire à partir des pixels situés d'un côté de l'axe de symétrie et le second bord de la projection de l'outil peut alors correspondre à la droite D'₁ obtenue par régression linéaire à partir des pixels situés de l'autre côté de l'axe de symétrie. Le procédé est répété pour tous les outils recherchés par le chirurgien et continue ensuite à l'étape 112.

A l'étape 112, pour chaque axe de symétrie M₁, M₂, le module de traitement 28 détermine quels pixels de l'axe de symétrie appartiennent à l'outil. Pour ce faire, on peut utiliser un procédé de sélection de pixels basé sur la méthode d'Otsu qui consiste à attribuer à chaque pixel une classe de couleur parmi deux classes de couleur. La méthode d'Otsu est, par exemple, décrite dans la publication intitulée "A threshold selection method from gray level histograms" de N. Otsu, IEEE Trans. Systems, Man and Cybernetics, vol. 9, pp. 62-66, 1979. A titre d'exemple, le module de traitement 28 détermine, pour tous les pixels de l'axe de symétrie, un histogramme d'une fonction H, représentative de la couleur du pixel, selon un nombre de niveaux, ou classes de couleur, qui dépend de la précision utilisée pour le codage de la fonction H. Un seuil est alors défini selon la méthode d'Otsu. On attribue alors aux pixels pour lesquels la fonction H est inférieure au seuil une première classe de couleur, par exemple la classe de couleur la plus basse de l'histogramme et on attribue aux pixels pour lesquels la fonction H est supérieure au seuil une seconde classe de couleur, par exemple la classe de couleur la plus élevée de l'histogramme. Les pixels de l'axe de symétrie se répartissent alors en groupes de pixels adjacents de la première ou de la seconde classe de couleur. On détermine alors, pour chaque classe de couleur, le groupe de pixels ayant le plus grand nombre de pixels. Pour déterminer la classe de couleur qui correspond à l'outil chirurgical et la classe de couleur qui correspond au fond de l'image, on considère que le groupe de pixels de l'image 106 sur l'axe de symétrie M₁ le plus proche du point d'insertion projeté O₁ appartient nécessairement à l'outil associé au point d'insertion projeté O₁. On obtient ainsi la classe de couleur associée à l'outil. L'étape 112 peut n'être mise en oeuvre que pour la première image fournie par la caméra 17. Pour les images fournies ultérieurement par la caméra 17, on peut considérer que l'outil correspond au groupe de pixels ayant le plus grand nombre de pixels et associé à la classe de couleur de l'outil déterminée précédemment. Le procédé continue à l'étape 114.

A l'étape 114, le module de traitement 28 détermine la position de l'extrémité de la projection de l'outil chirurgical 94, 95 sur l'image 106, ou pointe S₁, S₂ de l'outil. La pointe S₁, S₂ correspond à l'extrémité du groupe de pixels associé à l'outil opposée au point d'insertion projeté O₁, O₂. Lorsque la pointe S₁, S₂ ainsi déterminée se trouve sur un bord de l'image 106, cela signifie en fait que la pointe de l'outil n'est pas visible sur l'image 106. Il peut être nécessaire, pour déterminer plus finement la position de la pointe de l'outil, de considérer plus en détail les pixels de l'axe de symétrie M1, M2 autour de la pointe de l'outil et de leur appliquer des contraintes de couleur pour déterminer si, effectivement, ils appartiennent ou non à l'outil. A la fin du procédé de détection des outils chirurgicaux, le module de traitement 28 a donc déterminé pour chaque outil chirurgical 94, 95, l'axe de symétrie M₁, M₂, les bords D₁, D'₁, D₂, D'₂ et les pointes S₁, S₂. Le procédé continue à l'étape 102 pour le traitement d'une autre image fournie par la caméra 17.

La présente invention permet la mise en oeuvre de commandes de déplacement complexes par le module de traitement 28 pour le déplacement du système de positionnement 10 de la caméra 17. A titre d'exemple, le module de traitement 28 peut commander le système de positionnement 10 pour déplacer l'endoscope 12 jusqu'à ce que la pointe S₁, S₂ d'un outil chirurgical particulier 94, 95 se trouve au niveau du centre de l'image 106 fournie par la caméra 17. Pour ce faire, le chirurgien peut fournir une commande du type "centrer sur identifiant" au module de traitement 28 par l'intermédiaire du système de commande vocale 38. Le module de traitement 28 peut alors détecter les outils présents sur l'image fournie par la caméra 17. Si la pointe de l'outil correspondant à l'identifiant fourni par le chirurgien est présente sur l'image, le module de traitement 28 commande alors le système de positionnement 10 de façon à déplacer l'endoscope 12 pour que la pointe de l'outil se trouve au niveau d'une région centrale prédéfinie de l'image. Si l'outil correspondant à l'identifiant fourni par le chirurgien est présent sur l'image mais que la pointe de l'outil se trouve à l'extérieur de l'image, le module de traitement 28 est adapté à commander le système de positionnement 10 pour déplacer l'endoscope 12 vers la pointe de l'outil puisque la position du point d'insertion associée à l'outil est connue. Si l'outil correspondant à l'identifiant fourni par le chirurgien n'est pas présent sur l'image, le module de commande 28 peut commander le système de positionnement 10 pour orienter l'endoscope 12 vers le point d'insertion associé à l'outil recherché. L'outil doit alors se trouver sur l'image fournie par la caméra 17 et le centrage sur la pointe de l'outil est réalisé comme cela a été décrit précédemment.

Un autre exemple de commande consiste à déplacer l'endoscope 12 de façon que la pointe d'un outil chirurgical se trouve en permanence au niveau de la région centrale de l'image fournie par la caméra 17. Pour ce faire, le chirurgien peut fournir une commande du type "suivre identifiant" au module de traitement 28 par l'intermédiaire du système de commande vocale 38. Le module de traitement 28 commande alors le système de positionnement 10 comme cela a été décrit précédemment pour centrer l'image fournie par la caméra 17 sur la pointe de l'outil correspondant à l'identifiant fourni par le chirurgien. Par la suite, pour chaque nouvelle image reçue par le module de traitement 28, le module 28 commande le système de positionnement 10 pour recentrer, si nécessaire, l'image sur la pointe de l'outil.

Un autre exemple de commande consiste à commander un "agrandissement" de l'image au niveau de la pointe d'un outil particulier. Pour ce faire, le chirurgien peut fournir une commande du type "zoom sur identifiant" au module de traitement 28 par l'intermédiaire du système de commande vocale 38. Le module de traitement 28 commande alors le système de positionnement 10 comme cela a été décrit précédemment pour centrer l'image fournie par la caméra 17 sur la pointe de l'outil correspondant à l'identifiant fourni par le chirurgien. Le module de traitement 28 peut alors déterminer la distance entre les droites D₁, D₁', D₂, D₂' de bords associées à l'outil considéré au niveau de la pointe de l'outil et en déduire une valeur représentative de l'agrandissement de l'image. Le module de traitement 28 peut alors commander le système de positionnement 10 pour déplacer l'endoscope 12 afin d'augmenter ou de réduire un tel agrandissement de façon à atteindre un agrandissement prédéterminé ou un agrandissement fourni par le chirurgien. Selon une variante, la caméra 17 peut comporter une fonction d'agrandissement (zoom). Le module de traitement 28 est alors adapté à commander la fonction d'agrandissement de la caméra 17 à partir de la détection de la distance entre les droites D₁, D₁', D₂, D₂'.

La durée du traitement d'une image par le module de traitement 28 peut varier de quelques dizaines de millisecondes à une centaine de millisecondes. Le module de traitement 28 peut donc recevoir de nouvelles images à traiter à une fréquence élevée. Le procédé de détection d'outils chirurgicaux selon l'invention peut donc être mis en oeuvre en temps réel.

La présente invention permet donc au cours d'une intervention chirurgicale de soulager le chirurgien qui n'a pas à commander de façon systématique chaque déplacement de l'endoscope 12. En effet, les commandes précédemment décrites permettent au chirurgien de consacrer toute son attention à l'intervention chirurgicale, le module de traitement 28 commandant parallèlement les déplacements de l'endoscope 12 de façon automatique selon la commande initiale fournie par le chirurgien.

La présente invention peut être également mise en oeuvre lorsque les outils chirurgicaux n'ont pas une forme cylindrique. L'exemple de réalisation qui précède peut directement être appliqué à un outil ayant une forme allongée et dont la projection dans un plan comprend des bords rectilignes. C'est le cas pour une forme conique, prismatique, pyramidale, etc. De façon plus générale, même pour des outils ayant des formes plus complexes, des paramètres géométriques caractéristiques des outils peuvent être mémorisés au niveau du module de traitement 28. Les étapes 108 à 114 du procédé de détection des outils précédemment décrites peuvent alors être adaptées en fonction des paramètres géométriques caractéristiques de chaque outil chirurgical.

Bien entendu, la présente invention est susceptible de diverses variantes et modifications qui apparaîtront à l'homme de l'art. En particulier, bien que la présente invention ait été décrite pour des interventions chirurgicales, pour lesquelles les images vidéos sont fournies par une caméra liée à un endoscope, la présente invention peut s'appliquer à tout type d'image fournie par un système d'imagerie médicale. Il s'agit, par exemple, d'images par ultrasons, d'images fluoroscopiques ou d'images scanner. En outre, bien que la présente invention ait été décrite pour un exemple particulier de système de positionnement, elle peut s'appliquer à n'importe quel type de système de positionnement.

## Revendications

1. Dispositif de détection d'un outil chirurgical (94, 95) sur une image (106), ledit outil chirurgical passant par une incision (92, 93) pratiquée au niveau de la peau (14) ou d'un organe d'un patient, le dispositif comprenant :
un moyen de mémorisation (28) de paramètres de forme de l'outil chirurgical ;
un moyen de détermination (28) de la position de la projection (O₁, O₂) de l'incision dans le plan de l'image (PI) ; et
un moyen d'analyse (28) de l'image pour détecter, en tenant compte des paramètres de forme et de la position de la projection de l'incision, des points et/ou des droites caractéristiques (D₁, D₁', D₂, D₂', M₁, M₂, S₁, S₂) de la projection de l'outil chirurgical sur l'image.

2. Dispositif selon la revendication 1, dans lequel le moyen d'analyse (28) de l'image est adapté à :
déterminer, en tenant compte des paramètres de forme, des ensembles de pixels (Pix) de l'image (106) susceptibles de correspondre à des points et/ou droites caractéristiques de la projection de l'outil chirurgical sur l'image ; et
sélectionner des ensembles de pixels pertinents en tenant compte de la position de la projection de l'incision.

3. Dispositif selon la revendication 1 ou 2, comprenant :
un moyen d'acquisition (12, 17, 20, 24) de l'image ; et
un moyen de calibrage dudit moyen d'acquisition.

4. Dispositif selon l'une quelconque des revendications 1 à 3, comprenant :
un moyen de détermination (28) de la position de l'incision (92, 93) par rapport au patient ; et
un moyen de détermination (28) de la position de la projection (O₁, O₂) de l'incision dans le plan de l'image (PI) à partir de la position de l'incision (92, 93) par rapport au patient.

5. Dispositif selon l'une quelconque des revendications 1 à 4, comprenant :
des moyens d'acquisition (12, 17, 20, 24) de première et seconde images de l'incision (94, 95) ;
des moyens de détermination d'une première position d'un point de la projection de l'incision sur la première image et une seconde position dudit point sur la seconde image ; et
des moyens de détermination de la position dudit point par rapport au patient à partir des premières et seconde positions.

6. Dispositif selon l'une quelconque des revendications 1 à 5, dans lequel l'outil chirurgical (94, 95) a une forme allongée, les bords latéraux de la projection de l'outil dans le plan de l'image (PI) correspondant à des droites (D₁, D₁', D₂, D₂'), le moyen de détermination (28) des points et/ou droites caractéristiques (D₁, D₁', D₂, D₂', M₁, M₂, S₁, S₂) étant adapté à :
déterminer un ensemble de pixels (Pix) de l'image (106) tel que, pour chaque pixel de l'ensemble de pixels, le gradient (Grad(F)) d'une fonction qui dépend de la couleur du pixel est supérieur à un seuil ; et
sélectionner chaque pixel pour lequel la droite (D) passant par le pixel et perpendiculaire au gradient passe au niveau de la projection (O₁, O₂) de l'incision (92, 93) dans le plan de l'image.

7. Dispositif selon la revendication 6, dans lequel le moyen de détermination (28) des points et/ou droites caractéristiques (D₁, D₁', D₂, D₂', M₁, M₂, S₁, S₂) est adapté à :
déterminer l'axe de symétrie (M₁, M₂) de la projection de l'outil chirurgical (94, 95) sur l'image (106) à partir des pixels sélectionnés ;
déterminer les pixels de l'axe de symétrie appartenant à la projection de l'outil sur l'image ; et
déterminer le pixel de l'axe de symétrie correspondant à l'extrémité de l'outil (S₁, S₂).

8. Dispositif selon la revendication 7, dans lequel le moyen de détermination (28) de points et/ou droites caractéristiques (D₁, D₁', D₂, D₂', M₁, M₂, S₁, S₂) est adapté à :
déterminer, parmi les pixels sélectionnés, l'ensemble de pixels tels que, pour chaque couple de pixels de l'ensemble de pixels, la médiatrice du couple passe au niveau de la projection (O₁, O₂) de l'incision (92, 93) dans le plan de l'image (PI) ;
classer les médiatrices en groupes de médiatrices adjacentes ; et
déterminer l'axe de symétrie (M₁, M₂) à partir du groupe de médiatrices contenant le plus grand nombre de médiatrices.

9. Dispositif selon la revendication 7, dans lequel le moyen de détermination (28) de points et/ou droites caractéristiques (D₁, D₁', D₂, D₂', M₁, M₂, S₁, S₂) est adapté à :
attribuer à chaque pixel de l'axe de symétrie (M₁, M₂) une classe de couleur parmi une première ou une seconde classe de couleur ;
sélectionner un premier groupe de pixels adjacents contenant le plus grand nombre de pixels adjacents de la première classe de couleur et un second groupe de pixels adjacents contenant le plus grand nombre de pixels adjacents de la seconde classe de couleur ; et
sélectionner, parmi le premier ou le second groupe de pixels, le groupe de pixels le plus proche de la projection (O₁, O₂) de l'incision (92, 93) dans le plan de l'image (PI).

10. Dispositif (5) de commande d'un système de positionnement (10) d'un moyen d'acquisition (12, 17) d'images (106) d'un patient au niveau duquel au moins une incision (92, 93) a été pratiquée pour le passage d'un outil (94, 95), le dispositif de commande comprenant :
un moyen de fourniture (36, 38) d'instructions émises par un utilisateur ;
un dispositif de détection (28) selon l'une quelconque des revendications 1 à 9 ; et
un moyen de fourniture (28, 30) de signaux de commande au système de positionnement à partir des points et/ou droites caractéristiques (D₁, D₁', D₂, D₂', M₁, M₂, S₁, S₂) de l'outil chirurgical fournis par le dispositif de détection et des instructions fournies par le moyen de fourniture d'instructions.

11. Dispositif de commande selon la revendication 10, dans lequel le moyen d'acquisition d'images comprend un endoscope (12) et une caméra (17).

12. Procédé de détection d'un outil chirurgical (94, 95) sur une image (106), ledit outil passant par une incision (92, 93) pratiquée au niveau de la peau (14) ou d'un organe d'un patient, le procédé comportant les étapes suivantes :
a) mémoriser des paramètres de forme de l'outil chirurgical ;
b) déterminer la position de la projection (O₁, O₂) de l'incision dans le plan de l'image (PI) ; et
c) après l'étape b), analyser l'image pour détecter, en tenant compte des paramètres de forme et de la position de la projection de l'incision, des points et/ou droites caractéristiques (D₁, D₁', D₂, D₂', M₁, M₂, S₁, S₂) de la projection de l'outil chirurgical sur l'image.

13. Procédé selon la revendication 12, dans lequel l'étape consistant à déterminer la position de la projection (O₁, O₂) de l'incision dans le plan de l'image (PI) comporte les étapes suivantes :
déterminer la position de l'incision (92, 93) par rapport au patient ; et
déterminer la position de la projection (O₁, O₂) de l'incision dans le plan de l'image (PI) à partir de la position de l'incision (92, 93) par rapport au patient.

14. Procédé selon la revendication 12 ou 13, dans lequel l'étape consistant à déterminer la position de la projection (O₁, O₂) de l'incision dans le plan de l'image (PI) est réalisée par l'intermédiaire d'un moyen d'acquisition (12, 17, 20, 24) d'images, le procédé comportant une étape préalable de calibrage du moyen d'acquisition.

15. Procédé selon l'une quelconque des revendications 12 à 14, dans lequel l'outil chirurgical (94, 95) a une forme allongée, les bords latéraux de la projection de l'outil dans le plan de l'image (PI) correspondant à des droites (D₁, D₁', D₂, D₂', M₁, M₂, S₁, S₂), le procédé comprenant en outre les étapes suivantes :
déterminer un ensemble de pixels (Pix) de l'image (106) tel que, pour chaque pixel de l'ensemble de pixels, le gradient (Grad(F)) d'une fonction qui dépend de la couleur du pixel est supérieur à un seuil ; et
sélectionner chaque pixel pour lequel la droite (D) passant par le pixel et perpendiculaire au gradient passe au niveau de la projection (O₁, O₂) de l'incision (92, 93) dans le plan de l'image.

## Claims

1. A device for detecting a surgical tool (94, 95) in an image (106), said surgical tool going through an incision (92, 93) made in a patient's skin (14) or one of his organs, the device comprising:
means (28) for storing shape parameters of the surgical tool;
means (28) for determining the position of the projection (O₁, O₂) of the incision in the image plane (PI); and
means (28) for analyzing the image and detecting, taking into account the shape parameters and the position of the projection of the incision, points and/or straight lines (D₁, D₁', D₂, D₂', M₁, M₂, S₁, S₂) characteristic of the projection of the surgical tool on the image.

2. The device of claim 1, in which the analyzing means (28) is adapted for:
determining, taking into account the shape parameters, set of pixels (Pix) of the image (106) liable to correspond to points and/or lines characteristics of the projection of the surgical tool on the image; and
selecting pertinent set of pixels taking into account the position of the projection of the incision.

3. The device of claim 1 or 2, comprising:
means (12, 17, 20, 24) for acquiring the image ; and
means for calibrating said acquisition means.

4. The device of any of claims 1 to 3, comprising:
means (28) for determining the position of the incision (92, 93) with respect to the patient; and
means (28) for determining the position of the projection (O₁, O₂) of the incision in the image plane (PI) based on the position of the incision (92, 93) with respect to the patient.

5. The device of any of claims 1 to 4, comprising:
means for acquiring (12, 17, 20, 24) first and second images of the incision (94, 95);
means for determining a first position of a point of the projection of the incision on the first image and a second position of said point on the second image; and
means for determining the position of said point with respect to the patient based on the first and second positions.

6. The device of any of claims 1 to 5, in which the surgical tool (94, 95) has an elongated shape, the lateral edges of the projection of the tool in the image plane (PI) corresponding to straight lines (D₁, D₁', D₂, D₂'), the means (28) for determining the characteristic points and/or straight lines (D₁, D₁', D₂, D₂', M₁, M₂, S₁, S₂) being capable of:
determining a set of pixels (Pix) of the image (106) such that, for each pixel in the set of pixels, the gradient (Grad(F)) of a function which depends on the pixel color is greater than a threshold; and
selecting each pixel for which the straight line (D) crossing the pixel and perpendicular to the gradient runs at the level of the projection (O₁, O₂) of the incision (92, 93) in the image plane.

7. The device of claim 6, in which the means (28) for determining the characteristic points and/or straight lines (D₁, D₁', D₂, D₂', M₁, M₂, S₁, S₂) is capable of:
determining the axis of symmetry (M₁, M₂) of the projection of the surgical tool (94, 95) on the image (106) from the selected pixels;
determining the pixels of the axis of symmetry belonging to the projection of the tool on the image; and
determining the pixel of the axis of symmetry corresponding to the end of the tool (S₁, S₂).

8. The device of claim 7, in which the means (28) for determining characteristic points and/or straight lines (D₁, D₁', D₂, D₂', M₁, M₂, S₁, S₂) is capable of:
determining, from among the selected pixels, the set of pixels such that, for each pair of pixels in the set of pixels, the perpendicular bisector of the pair runs at the level of the projection (O₁, O₂) of the incision (92, 93) in the image plane (PI);
classifying the perpendicular bisectors in groups of adjacent perpendicular bisectors; and
determining the axis of symmetry (M₁, M₂) from the group of perpendicular bisectors containing the largest number of perpendicular bisectors.

9. The device of claim 7, in which the means (28) for determining characteristic points and/or straight lines (D₁, D₁', D₂, D₂', M₁, M₂, S₁, S₂) is capable of:
assigning to each pixel of the axis of symmetry (M₁, M₂) a color class from a first or a second color class;
selecting a first group of adjacent pixels containing the larger number of adjacent pixels of the first color class and a second group of adjacent pixels containing the largest number of adjacent pixels of the second color class; and
selecting, from among the first or the second group of pixels, the pixel group closest to the projection (O₁, O₂) of the incision (92, 93) in the image plane (PI).

10. A device (5) for controlling a positioning system (10) of means (12, 17) for acquiring images (106) of a patient in whom at least one incision (92, 93) has been made to let through a tool (94, 95), the control device comprising:
means (36, 38) for providing instructions transmitted by a user;
a detection device (28) according to any of claims 1 to 9; and
means (28, 30) for providing control signals to the positioning system based on the points and/or straight lines (D₁, D₁', D₂, D₂', M₁, M₂, S₁, S₂) characteristic of the surgical tool provided by the detection device and on the instructions provided by the means for providing instructions.

11. The control device of claim 10, in which the image acquisition means comprises an endoscope (12) and a camera (17).

12. A method for detecting a surgical tool (94, 95) in an image (106), said tool going through an incision (92, 93) made in a patient's skin (14) or in one of his organs, the method comprising the steps of:
a) storing shape parameters of the surgical tool;
b) determining the position of the projection (O₁, O₂) of the incision in the image plane (PI); and
c) after step b), analyzing the image for detecting, based on shape parameters and on the position of the projection of the incision, points and/or straight lines (D₁, D₁', D₂, D₂', M₁, M₂, S₁, S₂) characteristic of the projection of the surgical tool on the image.

13. The method of claim 12, in which the step of determining the position of the projection (O₁, O₂) of the incision in the image plane (PI) comprises the steps of:
determining the position of the incision (92, 93) with respect to the patient; and
determining the position of the projection (O₁, O₂) of the incision in the image plane (PI) from the position of the incision (92, 93) with respect to the patient.

14. The method of claim 12 or 13, in which the step of determining the position of the projection (O₁, O₂) of the incision in the image plane (PI) is carried out via image acquisition means (12, 17, 20, 24), the method comprising a prior acquisition means calibration step.

15. The method of any of claims 12 to 14, in which the surgical tool (94, 95) has an elongated shape, the lateral edges of the projection of the tool in the image plane (PI) corresponding to straight lines (D₁, D₁', D₂, D₂', M₁, M₂, S₁, S₂), the method further comprising the steps of:
determining a set of pixels (Pix) of the image (106) so that, for each pixel in the set of pixels, the gradient (Grad(F)) of a function which depends on the pixel color is greater than a threshold; and
selecting each pixel for which the straight line (D) crossing the pixel and perpendicular to the gradient runs at the level of the projection (O₁, O₂) of the incision (92, 93) in the image plane.

## Patentansprüche

1. Eine Vorrichtung zum Detektieren eines Operationswerkzeugs (94, 95) in einem Bild (106), wobei das Operationswerkzeug durch einen Einschnitt (92, 93) geht, der in die Haut (14) eines Patienten gemacht wurde oder in eines seiner Organe, wobei die Vorrichtung Folgendes aufweist:
Mittel (28) zum Speichern von Formparametern des Operationswerkzeugs;
Mittel (28) zum Bestimmen der Position der Projektion (O₁, O₂) des Einschnitts in der Bildebene (PI); und
Mittel (28) zum Analysieren des Bildes und zum Detektieren, unter Einbeziehung der Formparameter und der Position der Projektion der Einschnittpunkte und/oder geraden Linien (D₁, D_{1'}, D₂, D_{2'}, M₁, M₂, S₁, S₂), von Charakteristiken der Projektion des Operationswerkzeugs in dem Bild.

2. Die Vorrichtung nach Anspruch 1, in der die Mittel (28) zum Analysieren angepasst sind zum:
Bestimmen, unter Einbeziehung der Formparameter, eines Satzes von Pixel (Pix) des Bildes (106), die wahrscheinlich den Punkten und/oder Linien von Charakteristiken der Projektion des Operationswerkzeugs in dem Bild entsprechen; und
Auswählen eines geeigneten Satzes von Pixel, unter Berücksichtigung der Position der Projektion des Einschnitts.

3. Die Vorrichtung nach Anspruch 1 oder 2, die ferner Folgendes aufweist:
Mittel (12, 17, 20, 24) zum Aufnehmen des Bildes; und
Mittel zum Kalibrieren der Aufnahmemittel.

4. Die Vorrichtung nach einem der Ansprüche 1 bis 3, die ferner Folgendes aufweist:
Mittel (28) zum Bestimmen der Position des Einschnitts (92, 93) bezüglich des Patienten; und
Mittel (28) zum Bestimmen der Position der Projektion (O₁, O₂) des Einschnitts in der Bildebene (PI) basierend auf der Position des Einschnitts (92, 93) bezüglich des Patienten.

5. Die Vorrichtung nach einem der Ansprüche 1 bis 4, die Folgendes aufweist:
Mittel zum Aufnehmen (12, 17, 20, 24) von ersten und zweiten Bildern des Einschnitts (94, 95);
Mittel zum Bestimmen einer ersten Position eines Punkts der Projektion des Einschnitts in dem ersten Bild und einer zweiten Position des Punktes in dem zweiten Bild; und
Mittel zum Bestimmen der Position des Punktes bezüglich des Patienten, basierend auf der ersten und der zweiten Position.

6. Die Vorrichtung nach einem der Ansprüche 1 bis 5, in der das Operationswerkzeug (94, 95) eine längliche Form aufweist, wobei die seitlichen Kanten der Projektion des Werkzeugs in der Bildebene (PI) geraden Linien (D₁, D_{1'}, D₂, D_{2'}) entsprechen, wobei die Mittel (28) zum Bestimmen der charakteristischen Punkte und/oder geraden Linien (D₁, D_{1'}, D₂, D_{2'}, M₁, M₂, S₁, S₂) geeignet sind zum:
Bestimmen eines Satzes von Pixel (Pix) des Bildes (106) und zwar so, dass für jedes Pixel in dem Satz von Pixel, der Gradient (*̅G̅r̅a̅d̅*̅ (F)) einer Funktion, die von der Pixelfarbe abhängt, größer ist als eine Schwelle; und
Auswählen jedes Pixel für das die gerade Linie (D) das Pixel kreuzt und senkrecht zu dem Gradienten auf dem Niveau der Projektion (O₁, O₂) des Einschnitts (92, 93) in der Bildebene verläuft.

7. Die Vorrichtung nach Anspruch 6, in der die Mittel (28) zum Bestimmen der charakteristischen Punkte und/oder der geraden Linien (D₁, D_{1'}, D₂, D_{2'}, M₁, M₂, S₁, S₂) geeignet sind zum:
Bestimmen der Symmetrieachse (M₁, M₂) der Projektion des Operationswerkzeugs (94, 95) in dem Bild (106) von den ausgewählten Pixel;
Bestimmen der Pixel der Symmetrieachse, die zu der Projektion des Werkzeugs in dem Bild gehören; und
Bestimmen der Pixel der Symmetrieachse, die dem Ende des Werkzeugs (S₁, S₂) entsprechen.

8. Die Vorrichtung nach Anspruch 7, in der die Mittel (28) zum Bestimmen der charakteristischen Punkte und/oder geraden Linien (D₁, D_{1'}, D₂, D_{2'}, M₁, M₂, S₁, S₂) geeignet sind zum:
Bestimmen, aus den ausgewählten Pixel, des Satzes von Pixel und zwar so, dass für jedes Paar von Pixel in dem Satz von Pixel der senkrechte Bisektor des Paares auf dem Niveau der Projektion (O₁, O₂) des Einschnitts (92, 93) in der Bildebene (PI) verläuft;
Klassifizieren der senkrechten Bisektoren in Gruppen von benachbarten senkrechten Bisektoren; und
Bestimmen der Symmetrieachse (M₁, M₂) aus der Gruppe von senkrechten Bisektoren, die die größte Anzahl von senkrechten Bisektoren enthält.

9. Die Vorrichtung nach Anspruch 7, in der die Mittel (28) zum Bestimmen der charakteristischen Punkte und/oder geraden Linien (D₁, D_{1'}, D₂, D_{2'}, M₁, M₂, S₁, S₂) geeignet sind zum:
Zuordnen einer Farbklasse aus einer ersten oder einer zweiten Farbklasse zu jedem Pixel der Symmetrieachse (M₁, M₂);
Auswählen einer ersten Gruppe von benachbarten Pixel, die die größte Anzahl von benachbarten Pixel der ersten Farbklasse aufweist und einer zweiten Gruppe von benachbarten Pixel, die die größte Anzahl von benachbarten Pixel der zweiten Farbklasse aufweist; und
Auswählen, aus der ersten oder der zweiten Gruppe von Pixel, die Pixelgruppe die am nächsten zu der Projektion (O₁, O₂) des Einschnitts (92, 93) in der Bildebene (PI) liegt.

10. Eine Vorrichtung (5) zum Steuern eines Positionierungssystems (10) von Mitteln (12, 17) zum Aufnehmen von Bildern (106) eines Patienten in den wenigsten ein Einschnitt (92, 93) vorgenommen wurde, um ein Werkzeug (94, 95) hindurch zu lassen, wobei die Steuervorrichtung Folgendes aufweist:
Mittel (36, 38) zum Bereitstellen von Anweisungen, die von einem Benutzer gesendet wurden;
eine Detektionsvorrichtung (28) nach einem der Ansprüche 1 bis 9; und
Mittel (28, 30) zum Bereitstellen von Steuersignalen an das Positionierungssystem, basierend auf den Punkten und/oder geraden Linien (D₁, D_{1'}, D₂, D_{2'}, M₁, M₂, S₁, S₂) als charakteristisch für das Operationswerkzeug, die von der Detektionsvorrichtung bereitgestellt wurden und auf den Anweisungen, die von den Mitteln zum Bereitstellen von Anweisungen bereitgestellt wurden.

11. Die Steuervorrichtung nach Anspruch 10, in der die Bildaufnahmemittel ein Endoskop (12) und eine Kamera (17) aufweisen.

12. Ein Verfahren zum Detektieren eines Operationswerkzeugs (94, 95) in einem Bild (106), wobei das Werkzeug durch einen Einschnitt (92, 93), der in der Haut (14) eines Patienten oder in eines seiner Organe vorgenommen wurde, hindurch geht, wobei das Verfahren die folgenden Schritte aufweist:
a) Speichern von Formparameter des Operationswerkzeugs;
b) Bestimmen der Position der Projektion (O₁, O₂) des Einschnitts in der Bildebene (PI); und
c) nach Schritt b) Analysieren des Bildes zum Detektieren, basierend auf den Formparametern und auf der Position der Projektion der Einschnittpunkte und/oder geraden Linien (D₁, D_{1'}, D₂, D_{2'}, M₁, M₂, S₁, S₂), von Charakteristiken der Projektion des Operationswerkzeugs in dem Bild.

13. Das Verfahren nach Anspruch 12, in dem der Schritt des Bestimmens der Position der Projektion (O₁, O₂) des Einschnitts in der Bildebene (PI), ferner die folgenden Schritte aufweist:
Bestimmen der Position des Einschnitts (92, 93) bezüglich des Patienten; und
Bestimmen der Position der Projektion (O₁, O₂) des Einschnitts in der Bildebene (PI) von der Position des Einschnitts (92, 93) bezüglich des Patienten.

14. Das Verfahren nach Anspruch 12 oder 13, in dem der Schritt des Bestimmens der Position der Projektion (O₁, O₂) des Einschnitts in der Bildebene (PI) über Bildaufnahmemittel (12, 17, 20, 24) ausgeführt wird, wobei das Verfahren einen vorhergehenden Aufnahmemittel-Kalibrierungsschritt aufweist.

15. Das Verfahren nach einem der Ansprüche 12 bis 14, in dem das Operationswerkzeug (94, 95) eine längliche Form aufweist, wobei die seitlichen Kanten der Projektion des Werkzeugs in der Bildebene (PI) geraden Linien (D₁, D_{1'}, D₂, D_{2'}, M₁, M₂, S₁, S₂) entsprechen, wobei das Verfahren ferner die folgenden Schritte aufweist:
Bestimmen eines Satzes von Pixel (Pix) des Bildes (106) und zwar so, dass für jedes Pixel in dem Satz von Pixel, der Gradient (*̅G̅r̅a̅d̅*̅ (F)) einer Funktion, die von der Pixelfarbe abhängt, größer ist als eine Schwelle; und
Auswählen jedes Pixel für das die gerade Linie (D) das Pixel kreuzt und senkrecht zu dem Gradienten auf dem Niveau der Projektion (O₁, O₂) des Einschnitts (92, 93) in der Bildebene verläuft.
